# EUROPÄISCHE PATENTSCHRIFT

(11) **EP 1 967 104 B1**
(45) Veröffentlichungstag und Bekanntmachung des Hinweises auf die Patenterteilung: **09.06.2010**
(21) Anmeldenummer: 08003170.1
(22) Anmeldetag: 21.02.2008
(51) Int. Cl.: A47J 39/02

(54) **Wärmebrücke**
Heat bridge
Pont thermique

(30) Priorität: 08.03.2007 DE 102007012269
(43) Veröffentlichungstag der Anmeldung: 10.09.2008
(73) Patentinhaber: BLANCO CS GmbH + Co KG, 75038 Oberderdingen (DE)
(72) Erfinder: Böss, Ralf, 76703 Kraichtal (DE); Werner, Bernd, 76593 Gernsbach (DE)
(74) Vertreter: Hoeger, Stellrecht & Partner Patentanwälte

(56) Entgegenhaltungen:
- WO-A-2006/032408
- DE-A1- 10 015 799
- DE-A1- 19 757 004
- DE-U1- 8 705 540
- DE-U1- 20 115 020
- DE-U1-202005 016 736
- FR-A- 1 227 443

## Beschreibung

Die vorliegende Erfindung betrifft eine Wärmebrücke, umfassend ein Gehäuse, in dem mindestens eine Wärmestrahlereinrichtung angeordnet ist, und mindestens eine Stütze, welche im Betriebszustand der Wärmebrücke das Gehäuse trägt.

Solche Wärmebrücken sind aus dem Stand der Technik bekannt und dienen insbesondere dazu, Speisen während der Speisenzubereitung und/oder der Speisenausgabe zu erwärmen oder warmzuhalten.

Bei bekannten Wärmebrücken ist die Stütze starr und unlösbar an dem Gehäuse festgelegt, beispielsweise mit dem Gehäuse verschweißt. Dadurch sind die bekannten Wärmebrücken sperrig und schwer zu handhaben.

Die FR-A-1 227 443 offenbart eine Wärmebrücke gemäß dem Oberbegriff von Anspruch 1, deren Stützen relativ zu dem Gehäuse abklappbar sind.

Die DE-A-100 15 799 offenbart eine Wärmebrücke gemäß dem Oberbegriff von Anspruch 1, deren Stütze sich in einem eingeklappten Zustand senkrecht zu einer Längsrichtung des Gehäuses erstreckt.

Der vorliegenden Erfindung liegt die Aufgabe zugrunde, eine Wärmebrücke der eingangs genannten Art zu schaffen, welche besonders flexibel einsetzbar ist.

Diese Aufgabe wird durch eine Wärmebrücke nach Anspruch 1 gelöst.

Durch das erfindungsgemäße Konzept ist es möglich, die Wärmebrücke nach Gebrauch in einen platzsparenden Ruhezustand zu versetzen, in welchem die Wärmebrücke platzsparend transportiert und verstaut werden kann.

Dadurch wird ein besonders flexibler Einsatz der erfindungsgemäßen Wärmebrücke in den unterschiedlichsten Bereichen (Catering Events, Hotellerie, Gaststätten, Küchen, Tagungsräume) ermöglicht.

Durch die erfindungsgemäße Lösung kann die Wärmebrücke innerhalb kürzester Zeit an beliebigen Orten auf- und zusammengebaut werden und nach Gebrauch genauso schnell wieder abgebaut und platzsparend verstaut werden.

Die mindestens eine Stütze ist relativ zu dem Gehäuse abklappbar.

Die abklappbare Stütze kann auch in sich nochmals abklappbar und somit zusammenfaltbar ausgebildet sein.

Ergänzend hierzu kann die mindestens eine Stütze von dem Gehäuse abnehmbar sein.

Im Falle einer von dem Gehäuse abnehmbaren Stütze ist vorzugsweise vorgesehen, dass die mindestens eine Stütze ohne Verwendung eines Werkzeugs von dem Gehäuse abnehmbar ist.

Insbesondere kann in diesem Fall vorgesehen sein, dass die mindestens eine Stütze durch an der Stütze und/oder an dem Gehäuse vorhandene Rastmittel mit dem Gehäuse verbindbar und durch Lösen der Verrastung von dem Gehäuse abnehmbar ist.

Beispielsweise kann vorgesehen sein, dass die mindestens eine Stütze einen Verbindungsabschnitt aufweist, welcher in eine hierzu passende Aufnahme an dem Gehäuse einsteckbar und in der eingesteckten Position mit dem Gehäuse verrastbar ist.

Bei einer bevorzugten Ausgestaltung der Erfindung ist vorgesehen, dass die mindestens eine Stütze um eine Schwenkachse schwenkbar an dem Gehäuse angeordnet ist.

Vorzugsweise ist vorgesehen, dass die mindestens eine Stütze in einem ausgeklappten Zustand im Wesentlichen vertikal ausgerichtet ist.

Um die Stabilität der Wärmebrücke im Betriebszustand zu erhöhen, ist es günstig, wenn die mindestens eine Stütze in einem ausgeklappten Zustand an einer Stirnwand des Gehäuses anliegt.

Um zu erreichen, dass die Wärmebrücke im Ruhezustand eine möglichst kompakte Außenkontur aufweist, ist vorzugsweise vorgesehen, dass die mindestens eine Stütze in einem eingeklappten Zustand nicht über eine Unterseite des Gehäuses nach unten übersteht.

Aus demselben Grund ist es günstig, wenn die mindestens eine Stütze in einem eingeklappten Zustand nicht über eine Oberseite des Gehäuses nach oben übersteht.

Eine im Ruhezustand besonders kompakte Wärmebrücke wird dadurch erhalten, dass die mindestens eine Stütze sich in einem eingeklappten Zustand im Wesentlichen parallel zu einer Längsrichtung des Gehäuses erstreckt.

Es ist zur Erreichung einer kompakten Außenkontur der Wärmebrücke im Ruhezustand erfindungsgemäss vorgesehen, dass das Gehäuse mindestens eine Ausnehmung aufweist, welche in einem eingeklappten Zustand der mindestens einen Stütze zumindest einen Teil der Stütze aufnimmt.

Bei einer bevorzugten Ausgestaltung der Erfindung umfasst die mindestens eine Stütze mindestens zwei Stützelemente, mit denen die Stütze auf einen Untergrund und/oder einen Träger aufstellbar ist.

Zur Erhöhung der Stabilität der Stütze ist es günstig, wenn die mindestens zwei Stützelemente durch mindestens ein Verbindungselement miteinander verbunden sind.

Besonders günstig ist es, wenn die mindestens zwei Stützelemente durch mindestens zwei Verbindungselemente miteinander verbunden sind, welche in einer Längsrichtung der Stützelemente voneinander beabstandet sind.

Vorzugsweise sind die beiden Verbindungselemente auf verschiedenen Seiten einer Schwenkachse angeordnet, um welche die Stütze schwenkbar ist.

Wenn der Abstand zwischen mindestens zwei der Stützelemente mindestens der Ausdehnung des Gehäuses der Wärmebrücke in einer zu der Längsrichtung der Stützelemente senkrechten Richtung entspricht, so wird hierdurch erreicht, dass das Gehäuse im eingeklappten Zustand der Stütze zwischen die beiden Stützelemente der Stütze passt.

Um die Wärmebrücke platzsparend verstauen zu können, ist es ferner günstig, wenn mindestens zwei der Stützelemente im eingeklappten Zustand der mindestens einen Stütze auf einander entgegengesetzten Seiten des Gehäuses der Wärmebrücke angeordnet sind.

Die mindestens zwei Stützelemente können im Wesentlichen rohrförmig ausgebildet sein.

Insbesondere können die rohrförmigen Stützelemente einen im Wesentlichen kreisförmigen Querschnitt aufweisen.

Bei einer bevorzugten Ausgestaltung der Erfindung umfasst die Wärmebrücke mindestens zwei Stützen, welche relativ zu dem Gehäuse abklappbar und/oder von dem Gehäuse abnehmbar sind.

Die erfindungsgemäße Wärmebrücke eignet sich insbesondere zur Verwendung in einer Kombination mit einem Träger, auf den die Wärmebrücke aufstellbar ist.

Ein solcher Träger kann beispielsweise als eine Vitrine oder als ein Schrank ausgebildet sein.

Bei einer bevorzugten Ausgestaltung der Erfindung ist vorgesehen, dass der Träger als ein Tisch ausgebildet ist.

Um auch den Träger platzsparend verstauen und transportieren zu können, ist es von Vorteil, wenn der Träger abklappbare Beine aufweist.

Um direkt an dem Träger Speisen zubereiten und lagern zu können, ist es günstig, wenn der Träger mindestens eine Aufnahme für einen Speisenbehälter aufweist.

In der Gastronomie werden häufig sogenannte Gastronorm-Behälter eingesetzt, welche genormte Abmessungen aufweisen.

Es ist daher besonders günstig, wenn der Träger mindestens eine Aufnahme für einen Gastronorm-Speisenbehälter aufweist, also eine Aufnahme, die so geformt und dimensioniert ist, dass sie einen Gastronorm-Speisenbehälter aufnehmen kann.

Um die Wärmebrücke besonders stabil abstützen zu können, ist es von Vorteil, wenn der Träger eine Aufnahme für mindestens einen Abstützabschnitt der mindestens einen Stütze der Wärmebrücke aufweist.

Vorzugsweise weist der Träger mindestens zwei Aufnahmen für die Abstützabschnitte von mindestens zwei Stützelementen derselben Stütze auf.

Alternativ oder ergänzend hierzu kann vorgesehen sein, dass der Träger mindestens zwei Aufnahmen für die Abstützabschnitte von Stützelementen mindestens zwei verschiedener Stützen aufweist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Kombination aus einem Klapptisch und einer auf dem Klapptisch abgestützten Wärmebrücke mit abklappbaren Stützen;
- Fig. 2: eine vergrößerte Darstellung des Bereichs I aus Fig. 1;
- Fig. 3: eine schematische Vorderansicht der Kombination aus Klapptisch und Wärmebrücke aus Fig. 1;
- Fig. 4: eine schematische Seitenansicht der Kombination aus Klapptisch und Wärmebrücke aus den Fig. 1 bis 3, mit der Blickrichtung in Richtung des Pfeiles 4 in Fig. 3;
- Fig. 5: eine schematische Draufsicht von oben auf die Kombination aus Klapptisch und Wärmebrücke aus den Fig. 1 bis 4;
- Fig. 6: eine schematische Draufsicht von unten auf die Kombination aus Klapptisch und Wärmebrücke aus den Fig. 1 bis 5;
- Fig. 7: eine schematische Draufsicht auf die Wärmebrücke von unten, mit ausgeklappten Stützen;
- Fig. 8: einen schematischen Längsschnitt durch die Kombination aus Klapptisch und Wärmebrücke, im Bereich einer linken Stütze der Wärmebrücke;
- Fig. 9: eine schematische perspektivische Darstellung der Kombination aus Klapptisch und Wärmebrücke, wobei die Tischbeine des Klapptisches und die Stützen der Wärmebrücke eingeklappt sind;
- Fig. 10: eine Draufsicht von oben auf die Kombination aus Klapptisch und Wärmebrücke, wobei die Tischbeine des Klapptisches und die Stützen der Wärmebrücke eingeklappt sind;
- Fig. 11: eine schematische Vorderansicht der Kombination aus Klapptisch und Wärmebrücke, wobei die Tischbeine des Klapptisches und die Stützen der Wärmebrücke eingeklappt sind;
- Fig. 12: eine schematische Draufsicht von unten auf den Klapptisch mit eingeklappten Tischbeinen;
- Fig. 13: eine schematische Draufsicht von unten auf die Wärmebrücke mit eingeklappten Stützen; und
- Fig. 14: einen abschnittsweisen schematischen Längsschnitt durch die Wärmebrücke mit eingeklappten Stützen.

Gleiche oder funktional äquivalente Elemente sind in allen Figuren mit denselben Bezugszeichen bezeichnet.

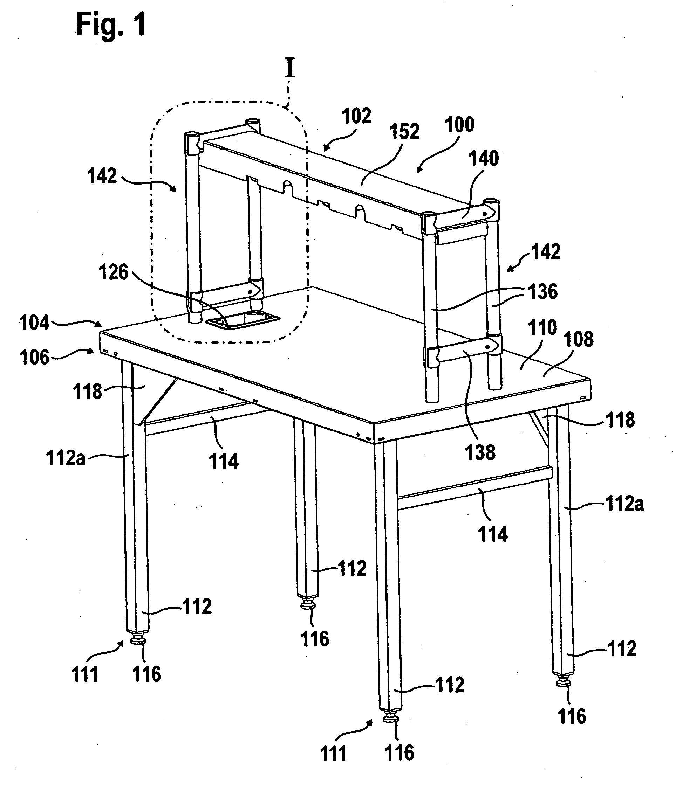

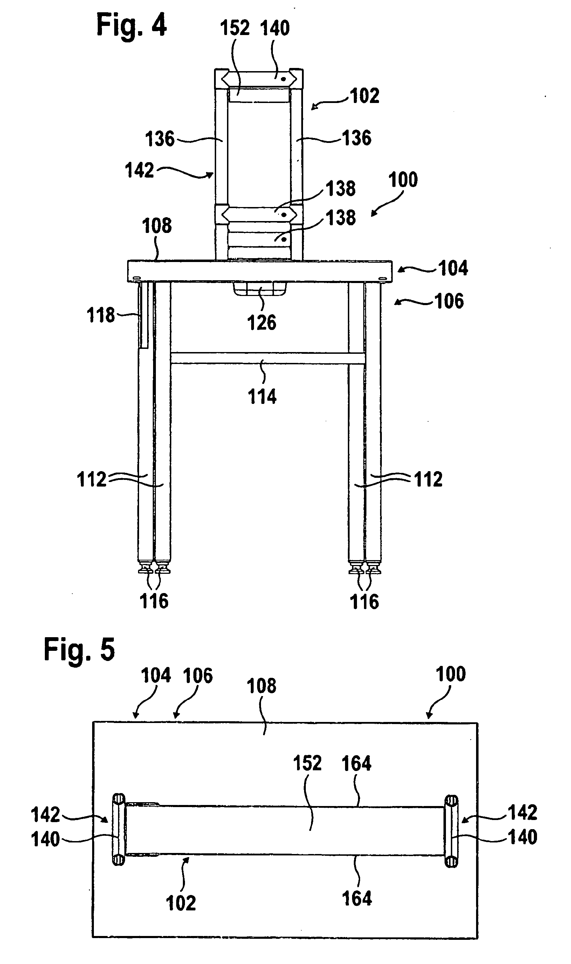

Eine in den Fig. 1 bis 14 dargestellte, als Ganzes mit 100 bezeichnete Kombination umfasst eine Wärmebrücke 102 und einen Träger 104 in Form eines Klapptisches 106.

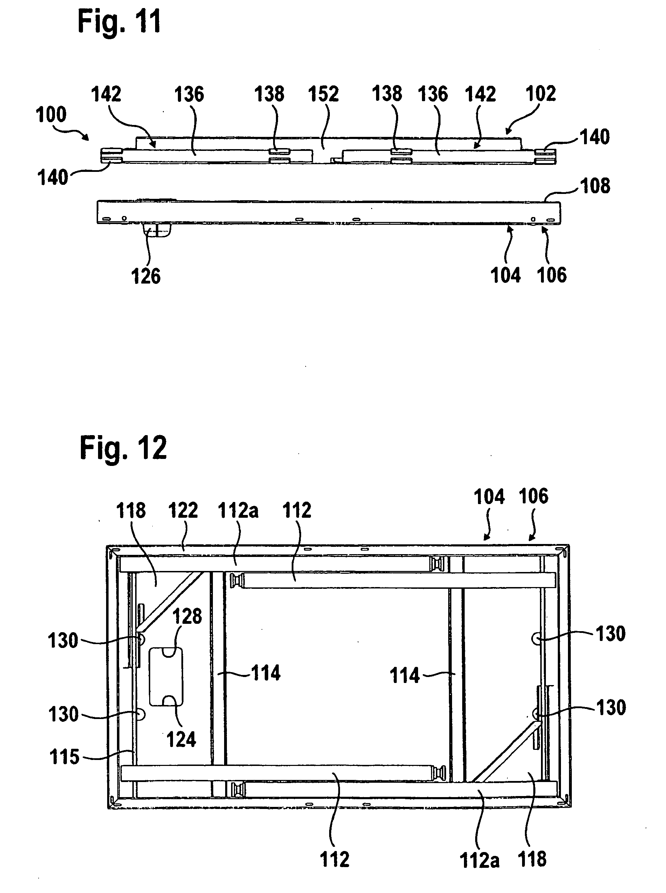

Der Klapptisch 106 umfasst eine Tischplatte 108 mit einer im Wesentlichen ebenen Arbeitsfläche 110 und zwei Paare 111 von Tischbeinen 112, welche jeweils paarweise durch eine Querstrebe 114 miteinander verbunden und gemeinsam um eine horizontale Schwenkwelle 115 abklappbar an der Tischplatte 108 gehalten sind (siehe Fig. 12).

Jedes der Tischbeine 112 ist an seinem unteren Ende mit einem Standfuß 116 versehen, dessen Position relativ zu dem jeweiligen Tischbein 112 höhenverstellbar ist, beispielsweise mittels an dem Standfuß 116 und dem jeweiligen Tischbein 112 vorgesehener komplementärer Gewinde, um eine Höhenverstellung des jeweiligen Standfußes 116 und damit ein Aufstellen des Klapptisches 106 auch auf einem unebenen Untergrund zu ermöglichen.

Zur Stabilisierung des Klapptisches 106 im in den Fig. 1 bis 6 dargestellten ausgeklappten Zustand der Tischbeine 112 dienen zwei Knotenbleche 118, von denen jedes mittels eines Scharniers an einem jeweils zugeordneten Tischbein 112a um eine im ausgeklappten Zustand des Tischbeins 112 vertikale Schwenkachse schwenkbar angelenkt ist, so dass das betreffende Knotenblech 118 bei ausgeklappten Tischbeinen 112 von einer Ruhestellung, in welcher das Knotenblech 118 parallel zur jeweils zugeordneten Querstrebe 114 ausgerichtet ist, in die in den Fig. 1 bis 6 dargestellte Arbeitsstellung geschwenkt werden kann, in welcher das Knotenblech 118 senkrecht zur jeweils zugeordneten Querstrebe 114 und im Wesentlichen vertikal ausgerichtet ist und mit seinem oberen Rand eine Unterseite der Tischplatte 108 abstützt.

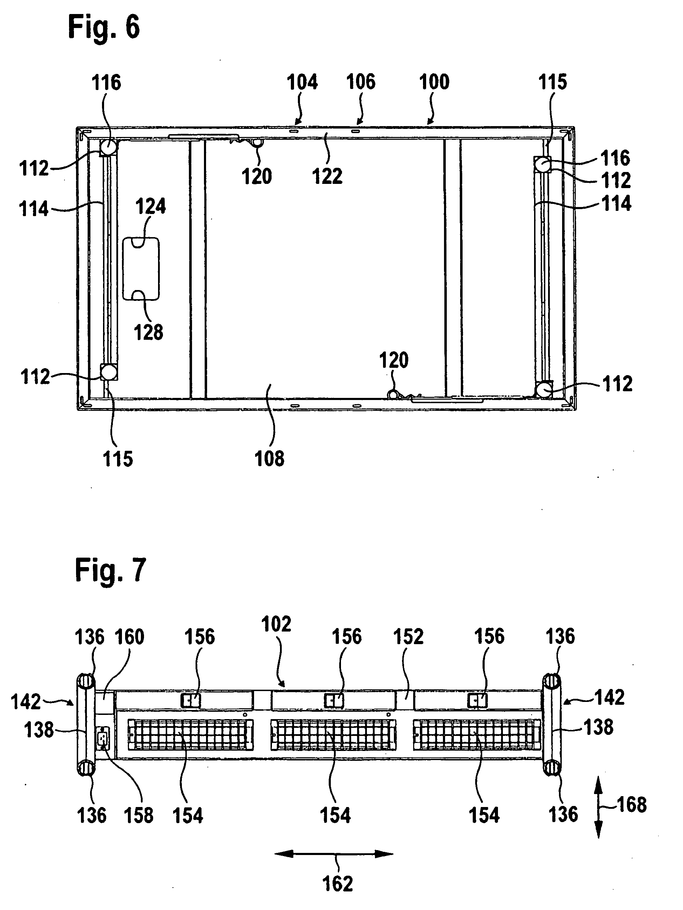

In dieser Arbeitsstellung ist jedes Knotenblech 118 mittels eines Splints 120 an einem im Wesentlichen rechteckigen Profilrahmen 122 des Klapptisches 106 gesichert, welcher an der Unterseite der Tischplatte 108 längs deren äußeren Randes umläuft und die Tischplatte 108 sowie die Schwenkwellen 115 trägt (siehe Fig. 6).

In der Tischplatte 108 ist eine Durchtrittsöffnung 124 vorgesehen, welche so geformt und dimensioniert ist, dass ein Gastronorm-Speisenbehälter 126 in die Durchtrittsöffnung 124 einhängbar ist, so dass die Durchtrittsöffnung 124 als Aufnahme 128 für den Gastronorm-Speisenbehälter 126 dient.

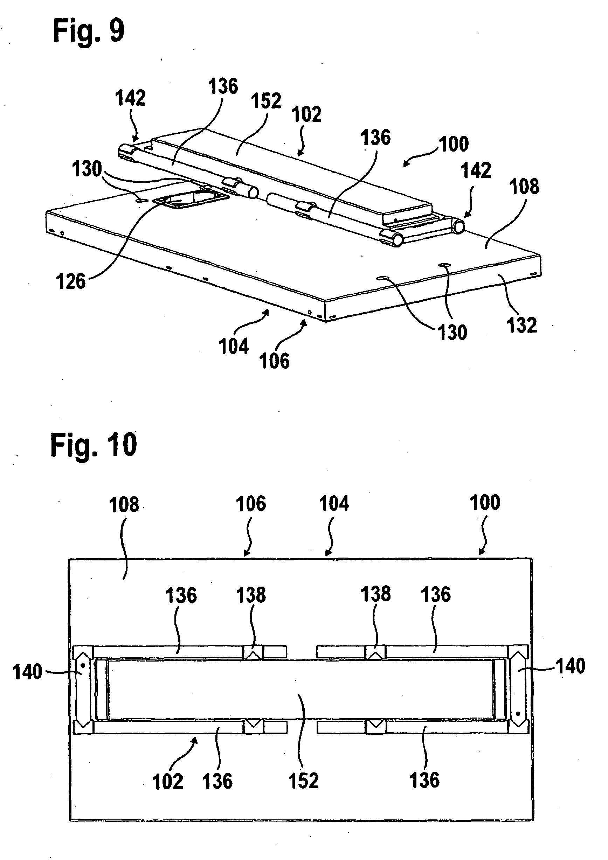

Wie aus Fig. 9 zu ersehen ist, ist die Tischplatte 108 ferner mit zwei Paaren von jeweils zwei Durchtrittslöchern 130 versehen, welche nahe der kurzen Stirnseiten 132 der Tischplatte 108 angeordnet sind und in einer parallel zu den kurzen Stirnseiten 132 verlaufenden Richtung voneinander beabstandet sind.

Diese Durchtrittslöcher 130 dienen zur Aufnahme jeweils eines unteren Abstützabschnittes 134 eines im Wesentlichen rohrförmigen Stützelements 136 der Wärmebrücke 102.

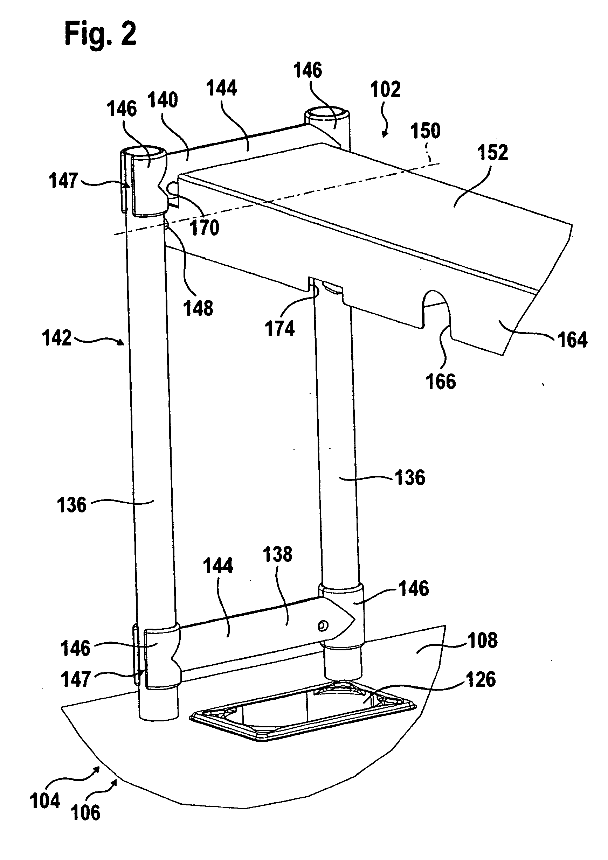

Wie am besten aus Fig. 2 zu ersehen ist, sind jeweils zwei solcher rohrförmigen Stützelemente 136 durch ein im Wesentlichen senkrecht zur Längsrichtung der Stützelemente 136 ausgerichtetes unteres Verbindungselement 138 und ein ebenfalls im Wesentlichen senkrecht zur Längsrichtung der Stützelemente 136 ausgerichtetes oberes Verbindungselement 140 miteinander verbunden, um jeweils eine abklappbare Stütze 142 der Wärmebrücke 102 zu bilden.

Sowohl das untere Verbindungselement 138 als auch das obere Verbindungselement 140 umfassen jeweils ein im Wesentlichen senkrecht zu den Längsrichtungen der miteinander verbundenen Stützelemente 136 ausgerichtetes, im Wesentlichen rohrförmiges Mittelteil 144 und zwei an den beiden Enden des Mittelteils 144 angeordnete, zu den miteinander zu verbindenden Stützelementen 136 koaxiale Aufnahmehülsen 146, durch welche sich die Stützelemente 136 hindurch erstrecken.

Die Aufnahmehülsen 146 können jeweils einen sich in deren Axialrichtung erstreckenden Spalt 147 aufweisen.

Die Verbindungselemente 138, 140 können beispielsweise mittels (nicht dargestellter) Madenschrauben an den Stützelementen 136 lösbar festgelegt sein.

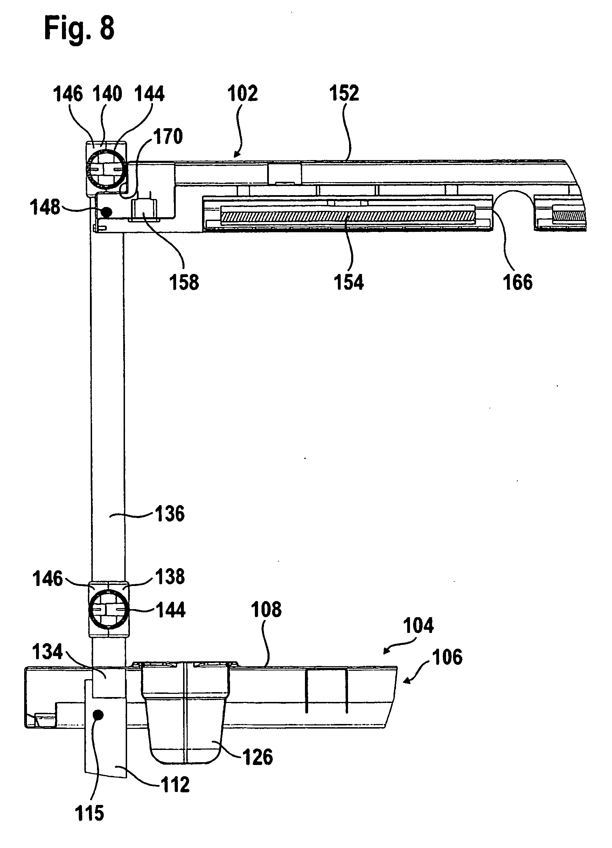

Jede der Stützen 142 ist mittels zweier koaxial angeordneter Schwenkzapfen 148 (siehe Fig. 2 und 8) um eine im Betriebszustand der Wärmebrücke 102 im Wesentlichen horizontale Schwenkachse 150 schwenkbar an einem im Wesentlichen quaderförmigen Gehäuse 152 der Wärmebrücke 102 gehalten.

Wie am besten aus Fig. 7 zu ersehen ist, ist das Gehäuse 152 an seiner der Arbeitsfläche 110 des Klapptisches 106 zugewandten Unterseite mit mehreren, beispielsweise drei, Wärmestrahlern 154, mit den jeweils zugehörigen Betätigungsschaltern 156 zum Ein- und Ausschalten jeweils eines Wärmestrahlers 154, mit einem elektrischen Netzanschluss 158 der Wärmebrücke 102 und mit einer Netzsteckdose 160 mit klappbarem Deckel versehen.

An den elektrischen Netzanschluss 158 ist ein (nicht dargestelltes) Stromnetzkabel anschließbar, um die Wärmebrücke 102 mit der zum Betrieb der Wärmestrahler 154 erforderlichen elektrischen Energie zu versorgen.

Die Netzsteckdose 160 kann zum Anschluss zusätzlicher elektrisch betriebener Apparate dienen, welche insbesondere zur Speisenzubereitung auf der Arbeitsfläche 110 des Klapptisches 106 verwendet werden.

Die Wärmestrahler 154 können beispielsweise als Quarzstrahler oder Keramikstrahler ausgebildet sein.

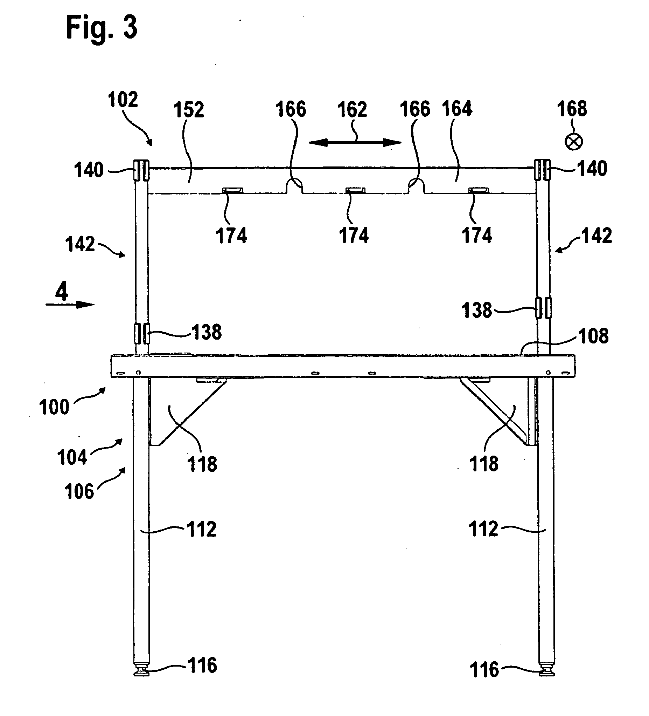

Wie am besten aus Fig. 3 zu ersehen ist, weist das Gehäuse 152 an seinen parallel zur Längsrichtung 162 des Gehäuses 152 verlaufenden Seitenwänden 164 zwei Ausnehmungen 166 auf, welche jeweils einer der abklappbaren Stützen 142 zugeordnet sind und dazu dienen, im eingeklappten Zustand der Stützen 142 jeweils ein unteres Verbindungselement 138 aufzunehmen, wie dies in den Fig. 11, 13 und 14 dargestellt ist.

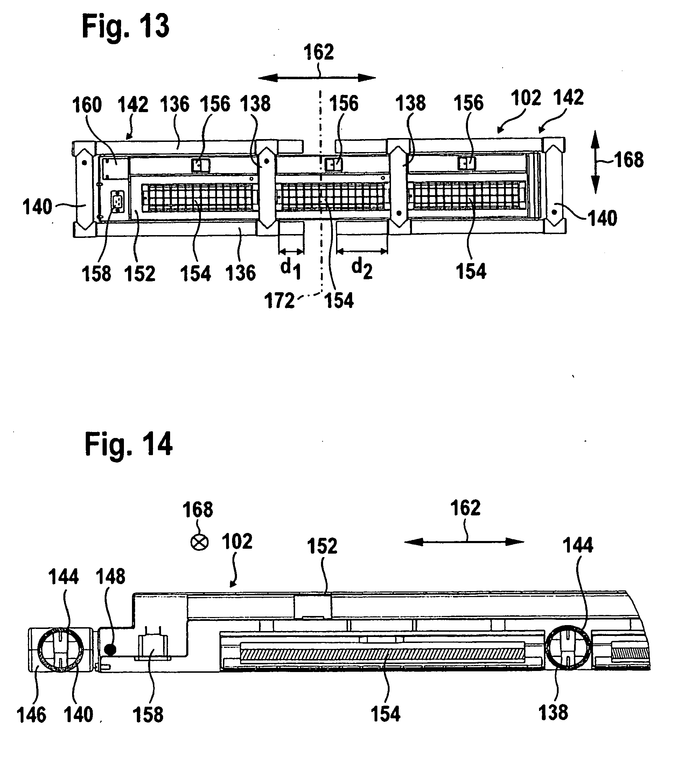

Wie am besten aus Fig. 13 zu ersehen ist, ist das Gehäuse 152 der Wärmebrücke 102 so dimensioniert, dass seine Breite, d.h. seine Erstreckung in der senkrecht zu der Längsrichtung 162 und senkrecht zur Vertikalen ausgerichteten Querrichtung 168, etwas kleiner ist als der gegenseitige Abstand der beiden Stützelemente 136 einer Stütze 142, so dass das Gehäuse 152 zwischen die beiden Stützelemente 136 jeder Stütze 142 passt.

Auf diese Weise können die unteren Verbindungselemente 138 beider Stützen 142 aus ihrer ausgeklappten Stellung in die in den Fig. 9 bis 14 dargestellte eingeklappte Stellung verschwenkt werden, in welcher die unteren Verbindungselemente 138 in den Ausnehmungen 166 des Gehäuses 152 aufgenommen sind.

Die Wärmebrücke 102 kann somit in eine äußerst kompakte Form zusammengeklappt werden.

Wie aus Fig. 11 zu ersehen ist, stehen die Stützen 142 im eingeklappten Zustand weder nach unten über die Unterseite des Gehäuses 152 der Wärmebrücke 102 noch nach oben über dessen Oberseite vor.

Die Wärmebrücke 102 weist somit im eingeklappten Zustand der Stützen 142 eine Höhe auf, welche die Höhe des Gehäuses 152 nicht übersteigt.

Wie am besten aus Fig. 13 zu ersehen ist, sind die unteren Verbindungselemente 138 der beiden Stützen 142 der Wärmebrücke 102 in unterschiedlichen Abständen d₁ und d₂ von den jeweiligen unteren Enden der Stützen 142 angeordnet.

Hierdurch kommen die unteren Verbindungselemente 138 bei eingeklappten Stützen 142 genau zwischen zwei benachbarte Wärmestrahler 154 zu liegen, obwohl die Wärmestrahler 154 wegen des Vorhandenseins des elektrischen Netzanschlusses 158 und der Netzsteckdose 160 unsymmetrisch bezüglich einer parallel zur Querrichtung 168 verlaufenden Quermittelebene 172 des Gehäuses 152 angeordnet sind.

Dementsprechend weisen auch die Ausnehmungen 166 in den Seitenwänden 164 des Gehäuses 152, welche die unteren Verbindungselemente 138 der beiden Stützen 142 aufnehmen, jeweils unterschiedliche Abstände von der jeweils zugeordneten Stirnwand 170 des Gehäuses 152 auf.

In dem in den Fig. 9 bis 14 dargestellten eingeklappten Zustand der Wärmebrücke 102 und des Klapptisches 106 kann die Kombination 100 aus Wärmebrücke 102 und Klapptisch 106 platzsparend eingelagert und beispielsweise auf Euro-Paletten transportiert werden.

Zum Aufbau der Kombination 100 am Nutzungsort wird zunächst der Klapptisch 106 durch Ausklappen der Tischbeine 112, Verschwenken der Knotenbleche 118 in deren Arbeitsstellung und Sichern der Knotenbleche 118 in der Arbeitsstellung mittels der Splinte 120 aufgebaut.

Die Wärmebrücke 102 wird durch Ausklappen der Stützen 142 aus der in den Fig. 9 bis 14 dargestellten eingeklappten Stellung in die in den Fig. 1 bis 8 dargestellte ausgeklappte Stellung durch Schwenken um die Schwenkachsen 150 um jeweils ungefähr 90° vom Ruhezustand in den Betriebszustand überführt.

Die Stützelemente 136 werden mit ihren unteren Abstützabschnitten 134 in die Durchtrittslöcher 130 der Tischplatte 108 eingesteckt und dadurch an der Tischplatte 108 fixiert.

Dabei können die unteren Enden der Stützelemente 136 an den Schwenkwellen 115 der Paare 111 von Tischbeinen 112 abgestützt werden.

Das Einstecken der Stützelemente 136 an der Tischplatte 108 sorgt für einen stabilen Stand der Wärmebrücke 102 im ausgeklappten Betriebszustand.

Wie am besten aus Fig. 8 zu ersehen ist, liegen die Mittelteile 144 der oberen Verbindungselemente 140 der Stützen 142 im ausgeklappten Zustand der Stützen 142 tangential an der jeweils benachbarten Stirnwand 170 des Gehäuses 152 der Wärmebrücke 102 an. Dadurch ist gewährleistet, dass das Gehäuse 152 im Betriebszustand der Wärmebrücke 102 keine Relativbewegung gegenüber den an der Tischplatte 108 fixierten Stützen 142 ausführt.

Die ausgeklappte und an der Tischplatte 108 fixierte Wärmebrücke 102 wird über den elektrischen Netzanschluss 158 an das elektrische Stromnetz angeschlossen, worauf die Wärmestrahler 154 durch Betätigen der Betätigungsschalter 156 in Betrieb genommen werden können.

Um den Zugang zu den Betätigungsschaltern 156 zu erleichtern, ist das Gehäuse 152 an einer seiner Seitenwände 164 mit benachbart zu den Betätigungsschaltern angeordneten Aussparungen 174 versehen.

Die Arbeitsfläche 110 des Klapptisches 106 kann nun zum Anrichten und/oder Portionieren von Kalt- oder Warmspeisen, als Ausgabe- oder Präsentationstisch für eine bediente Speisenausgabe, als Ausgabe- oder Präsentationstisch für eine Selbstbedienungs-Speisenausgabe oder als Arbeitstisch für eine kurzfristige Kapazitätserweiterung genutzt werden.

Auf der Tischplatte 108 unterhalb der Wärmestrahler 154 der Wärmebrücke 102 angeordnete Speisenbehälter, Teller und/oder Tabletts werden mittels der Wärmestrahler 154 erwärmt oder zumindest warmgehalten.

Die Kombination 100 aus Wärmebrücke 102 und Träger 104 eignet sich insbesondere zum flexiblen Einsatz in Veranstaltungsräumen der Gastronomie, in Bankettsälen der Hotellerie oder für das Event-Catering im Freien, in Stadien, Hallen usw.

Diese Kombination 100 kann insbesondere als Bestandteil einer Anrichtestraße verwendet werden, längs welcher mehrere Arbeitstische längs einer Schickrichtung aufeinanderfolgen, wobei Köche die Speisen sehr schnell und effizient auf Tellern anrichten und in der Schickrichtung weiterreichen.

Der insbesondere als Klapptisch 106 ausgebildete Träger 104 kann aus einem metallischen Material, insbesondere aus einem Edelstahlmaterial, gebildet sein.

Das Gehäuse 152 und die Stützelemente 136 der Wärmebrücke 102 können ebenfalls aus einem metallischen Material, insbesondere aus einem Edelstahlmaterial, gebildet sein.

Die Verbindungselemente 138, 140 der Stützen 142 der Wärmebrücke 102 können ebenfalls aus einem metallischen Material, insbesondere aus einem Edelstahlmaterial, oder auch aus einem Kunststoffmaterial gebildet sein.

In der Tischplatte 108 des Klapptisches 106 können auch zusätzliche Ausschnittsöffnungen vorgesehen sein, um weitere Gastronorm-Speisenbehälter oder andere Behälter aufzunehmen.

An der Wärmebrücke 102, insbesondere am Gehäuse 152, kann ferner ein (nicht dargestelltes) Hustenschutzglas angeordnet sein, um auf der Arbeitsfläche 110 abgestellte Speisen vor einer Kontaminierung zu schützen.

## Patentansprüche

1. Wärmebrücke, umfassend ein Gehäuse (152), in dem mindestens eine Wärmestrahleinrichtung (154) angeordnet ist, und mindestens eine Stütze (142), welche im Betriebszustand der Wärmebrücke (102) das Gehäuse (152) trägt,
wobei die mindestens eine Stütze (142) relativ zu dem Gehäuse (152) abklappbar ist,
**dadurch gekennzeichnet,**
**dass** die mindestens eine Stütze (142) sich in einem eingeklappten Zustand im Wesentlichen parallel zu einer Längsrichtung (162) des Gehäuses (152) erstreckt und
**dass** das Gehäuse (152) mindestens eine Ausnehmung (166) aufweist, welche in einem eingeklappten Zustand der mindestens einen Stütze (142) zumindest einen Teil der Stütze (142) aufnimmt.

2. Wärmebrücke nach Anspruch 1, **dadurch gekennzeichnet, dass** die mindestens eine Stütze (142) von dem Gehäuse (152) abnehmbar ist.

3. Wärmebrücke nach einem der Ansprüche 1 oder 2, **dadurch gekennzeichnet, dass** die mindestens eine Stütze (142) um eine Schwenkachse (150) schwenkbar an dem Gehäuse (152) angeordnet ist.

4. Wärmebrücke nach einem der Ansprüche 1 bis 3, **dadurch gekennzeichnet, dass** die mindestens eine Stütze (142) in einem ausgeklappten Zustand im Wesentlichen vertikal ausgerichtet ist.

5. Wärmebrücke nach einem der Ansprüche 1 bis 4, **dadurch gekennzeichnet, dass** die mindestens eine Stütze (142) in einem ausgeklappten Zustand an einer Stirnwand (170) des Gehäuses (152) anliegt.

6. Wärmebrücke nach einem der Ansprüche 1 bis 5, **dadurch gekennzeichnet, dass** die mindestens eine Stütze (142) in einem eingeklappten Zustand nicht über eine Unterseite des Gehäuses (152) nach unten übersteht.

7. Wärmebrücke nach einem der Ansprüche 1 bis 6, **dadurch gekennzeichnet, dass** die mindestens eine Stütze (142) in einem eingeklappten Zustand nicht über eine Oberseite des Gehäuses (152) nach oben übersteht.

8. Wärmebrücke nach einem der Ansprüche 1 bis 7, **dadurch gekennzeichnet, dass** die mindestens eine Stütze (142) mindestens zwei Stützelemente (136) umfasst, mit denen die Stütze (142) auf einen Untergrund und/oder einen Träger (104) aufstellbar ist.

9. Wärmebrücke nach Anspruch 8, **dadurch gekennzeichnet, dass** die mindestens zwei Stützelemente (136) durch mindestens ein Verbindungselement (138, 140) miteinander verbunden sind.

10. Wärmebrücke nach einem der Ansprüche 8 oder 9, **dadurch gekennzeichnet, dass** die mindestens zwei Stützelemente (136) durch mindestens zwei Verbindungselemente (138, 140) miteinander verbunden sind, welche in einer Längsrichtung der Stützelemente (136) voneinander beabstandet sind.

11. Wärmebrücke nach Anspruch 10, **dadurch gekennzeichnet, dass** die beiden Verbindungselemente (138, 140) auf verschiedenen Seiten einer Schwenkachse (150) angeordnet sind, um welche die Stütze (142) schwenkbar ist.

12. Wärmebrücke nach einem der Ansprüche 8 bis 11, **dadurch gekennzeichnet, dass** der Abstand zwischen mindestens zwei der Stützelemente (136) mindestens der Ausdehnung des Gehäuses (152) der Wärmebrücke (102) in einer zu der Längsrichtung der Stützelemente (136) senkrechten Richtung entspricht.

13. Wärmebrücke nach einem der Ansprüche 8 bis 12, **dadurch gekennzeichnet, dass** mindestens zwei der Stützelemente (136) im eingeklappten Zustand der mindestens einen Stütze (142) auf einander entgegengesetzten Seiten des Gehäuses (152) der Wärmebrücke (102) angeordnet sind.

14. Wärmebrücke nach einem der Ansprüche 8 bis 13, **dadurch gekennzeichnet, dass** die mindestens zwei Stützelemente (136) im Wesentlichen rohrförmig ausgebildet sind.

15. Wärmebrücke nach einem der Ansprüche 1 bis 14, **dadurch gekennzeichnet, dass** die Wärmebrücke (102) mindestens zwei Stützen (142) umfasst, welche relativ zu dem Gehäuse (152) abklappbar und/oder von dem Gehäuse abnehmbar sind.

16. Kombination aus einer Wärmebrücke (102) nach einem der Ansprüche 1 bis 15 und einem Träger (104), auf den die Wärmebrücke (102) aufstellbar ist.

17. Kombination nach Anspruch 16, **dadurch gekennzeichnet, dass** der Träger (104) als ein Tisch (106) ausgebildet ist.

18. Kombination nach einem der Ansprüche 16 oder 17, **dadurch gekennzeichnet, dass** der Träger (104) abklappbare Beine (112) aufweist.

19. Kombination nach einem der Ansprüche 16 bis 18, **dadurch gekennzeichnet, dass** der Träger (104) mindestens eine Aufnahme (128) für einen Speisenbehälter aufweist.

20. Kombination nach einem der Ansprüche 16 bis 19, **dadurch gekennzeichnet, dass** der Träger (104) mindestens eine Aufnahme (128) für einen Gastronorm-Speisenbehälter (126) aufweist.

21. Kombination nach einem der Ansprüche 16 bis 20, **dadurch gekennzeichnet, dass** der Träger (104) eine Aufnahme (130) für mindestens einen Abstützabschnitt (134) der mindestens einen Stütze (142) der Wärmebrücke (102) aufweist.

22. Kombination nach Anspruch 21, **dadurch gekennzeichnet, dass** der Träger (104) mindestens zwei Aufnahmen (130) für die Abstützabschnitte (134) von mindestens zwei Stützelementen (136) der mindestens einen Stütze (142) aufweist.

23. Kombination nach einem der Ansprüche 21 oder 22, **dadurch gekennzeichnet, dass** der Träger (104) mindestens zwei Aufnahmen (130) für die Abstützabschnitte (134) von Stützelementen (136) mindestens zwei verschiedener Stützen (142) aufweist.

## Claims

1. Heat bridge, comprising a housing (152), in which at least one heat radiating device (154) is disposed, and at least one support (142), which in the operating state of the heat bridge (102) carries the housing (152), wherein the at least one support (142) is foldable relative to the housing (152),
**characterized in**
**that** the at least one support (142) in a folded-in state extends substantially parallel to a longitudinal direction (162) of the housing (152) and
**that** the housing (152) has at least one recess (166), which in a folded-in state of the at least one support (142) receives at least part of the support (142).

2. Heat bridge according to claim 1, **characterized in that** the at least one support (142) is detachable from the housing (152).

3. Heat bridge according to one of claims 1 or 2, **characterized in that** the at least one support (142) is disposed on the housing (152) so as to be pivotable about a pivot axis (150).

4. Heat bridge according to one of claims 1 to 3, **characterized in that** the at least one support (142) in a folded-out state is directed substantially vertically.

5. Heat bridge according to one of claims 1 to 4, **characterized in that** the at least one support (142) in a folded-out state abuts against an end wall (170) of the housing (152).

6. Heat bridge according to one of claims 1 to 5, **characterized in that** the at least one support (142) in a folded-in state does not project down beyond an underside of the housing (152).

7. Heat bridge according to one of claims 1 to 6, **characterized in that** the at least one support (142) in a folded-in state does not project up beyond an upper side of the housing (152).

8. Heat bridge according to one of claims 1 to 7, **characterized in that** the at least one support (142) comprises at least two support elements (136), by means of which the support (142) is mountable onto a base and/or a carrier (104).

9. Heat bridge according to claim 8, **characterized in that** the at least two support elements (136) are connected to one another by at least one connection element (138, 140).

10. Heat bridge according to one of claims 8 or 9, **characterized in that** the at least two support elements (136) are connected to one another by at least two connection elements (138, 140) that are mutually spaced apart in a longitudinal direction of the support elements (136).

11. Heat bridge according to claim 10, **characterized in that** the two connection elements (138, 140) are disposed at different sides of a pivot axis (150), about which the support (142) is pivotable.

12. Heat bridge according to one of claims 8 to 11, **characterized in that** the spacing between at least two of the support elements (136) corresponds at least to the extent of the housing (152) of the heat bridge (102) in a direction at right angles to the longitudinal direction of the support elements (136).

13. Heat bridge according to one of claims 8 to 12, **characterized in that** at least two of the support elements (136) in the folded-in state of the at least one support (142) are disposed at mutually opposite sides of the housing (152) of the heat bridge (102).

14. Heat bridge according to one of claims 8 to 13, **characterized in that** the at least two support elements (136) are of a substantially tubular construction.

15. Heat bridge according to one of claims 1 to 14, **characterized in that** the heat bridge (102) comprises at least two supports (142), which are foldable relative to the housing (152) and/or detachable from the housing.

16. Combination of a heat bridge (102) according to one of claims 1 to 15 and a carrier (104), onto which the heat bridge (102) is mountable.

17. Combination according to claim 16, **characterized in that** the carrier (104) takes the form of a table (106).

18. Combination according to one of claims 16 or 17, **characterized in that** the carrier (104) has foldable legs (112).

19. Combination according to one of claims 16 to 18, **characterized in that** the carrier (104) has at least one receiver (128) for a food container.

20. Combination according to one of claims 16 to 19, **characterized in that** the carrier (104) has at least one receiver (128) for a gastronorm food container (126).

21. Combination according to one of claims 16 to 20, **characterized in that** the carrier (104) has a receiver (130) for at least one supporting portion (134) of the at least one support (142) of the heat bridge (102).

22. Combination according to claim 21, **characterized in that** the carrier (104) has at least two receivers (130) for the supporting portions (134) of at least two support elements (136) of the at least one support (142).

23. Combination according to one of claims 21 or 22, **characterized in that** the carrier (104) has at least two receivers (130) for the supporting portions (134) of support elements (136) of at least two different supports (142).

## Revendications

1. Pont thermique, comportant un boîtier (152) dans lequel est disposé au moins un appareil à rayonnement thermique (154), et au moins une béquille (142) portant le boîtier (152) lorsque le pont thermique (102) est en fonctionnement,
la ou les béquilles (142) pouvant être repliées par rapport au boîtier (152),
**caractérisé en ce que**
la ou les béquilles (142) s'étendent dans un état replié sensiblement parallèlement à une direction longitudinale (162) du boîtier (152) et
**en ce que** le boîtier (152) comprend au moins un évidement (166) recevant dans un état replié de la ou des béquilles (142) au moins une partie de la béquille (142).

2. Pont thermique selon la revendication 1, **caractérisé en ce que** la ou les béquilles (142) peuvent être retirées du boîtier (152).

3. Pont thermique selon l'une quelconque des revendications 1 ou 2, **caractérisé en ce que** la ou les béquilles (142) sont disposées sur le boîtier (152) de manière à pouvoir pivoter autour d'un axe de pivotement (150).

4. Pont thermique selon l'une quelconque des revendications 1 à 3, **caractérisé en ce que** la ou les béquilles (142) sont orientées sensiblement verticalement dans un état déplié.

5. Pont thermique selon l'une quelconque des revendications 1 à 4, **caractérisé en ce que** la ou les béquilles (142), dans un état déplié, reposent contre une paroi avant (170) du boîtier (152).

6. Pont thermique selon l'une quelconque des revendications 1 à 5, **caractérisé en ce que** la ou les béquilles (142), dans un état replié, ne font pas saillie vers le bas d'une face inférieure du boîtier (152).

7. Pont thermique selon l'une quelconque des revendications 1 à 6, **caractérisé en ce que** la ou les béquilles (142), dans un état replié, ne font pas saillie vers le haut d'une face supérieure du boîtier (152).

8. Pont thermique selon l'une quelconque des revendications 1 à 7, **caractérisé en ce que** la ou les béquilles (142) comportent au moins deux éléments d'appui (136) permettant d'installer la béquille (142) sur un sol et/ou un support (104).

9. Pont thermique selon la revendication 8, **caractérisé en ce que** les deux éléments d'appui (136) ou plus sont raccordés ensemble par au moins un élément de raccordement (138, 140).

10. Pont thermique selon l'une quelconque des revendications 8 ou 9, **caractérisé en ce que** les deux éléments d'appui (136) ou plus sont raccordés ensemble par au moins deux éléments de raccordement (138, 140) espacés les uns des autres dans une direction longitudinale des éléments d'appui (136).

11. Pont thermique selon la revendication 10, **caractérisé en ce que** les deux éléments de raccordement (138, 140) sont disposés sur différentes faces d'un axe de pivotement (150) autour duquel la béquille (142) peut pivoter.

12. Pont thermique selon l'une quelconque des revendications 8 à 11, **caractérisé en ce que** la distance entre au moins deux des éléments d'appui (136) correspond au moins à l'extension du boîtier (152) du pont thermique (102) dans une direction perpendiculaire à la direction longitudinale des éléments d'appui (136).

13. Pont thermique selon l'une quelconque des revendications 8 à 12, **caractérisé en ce qu'**au moins deux des éléments d'appui (136), dans l'état replié de la ou des béquilles (142), sont disposés sur les faces mutuellement opposées du boîtier (152) du pont thermique (102).

14. Pont thermique selon l'une quelconque des revendications 8 à 13, **caractérisé en ce que** les deux éléments d'appui (136) ou plus sont conçus sensiblement de façon tubulaire.

15. Pont thermique selon l'une quelconque des revendications 1 à 14, **caractérisé en ce que** le pont thermique (102) comporte au moins deux béquilles (142) pouvant être repliées par rapport au boîtier (152) et/ou retirées dudit boîtier.

16. Combinaison d'un pont thermique (102) selon l'une quelconque des revendications 1 à 15 et d'un support (104) sur lequel le pont thermique (102) peut être installé.

17. Combinaison selon la revendication 16, **caractérisée en ce que** le support (104) est conçu comme une table (106).

18. Combinaison selon l'une quelconque des revendications 16 ou 17, **caractérisée en ce que** le support (104) comprend des jambes repliables (112).

19. Combinaison selon l'une quelconque des revendications 16 à 18, **caractérisée en ce que** le support (104) comprend au moins un logement (128) pour une marmite norvégienne.

20. Combinaison selon l'une quelconque des revendications 16 à 19, **caractérisée en ce que** le support (104) comprend au moins un logement (128) pour une marmite norvégienne gastronorme (126).

21. Combinaison selon l'une quelconque des revendications 16 à 20, **caractérisée en ce que** le support (104) comprend un logement (130) pour au moins une partie d'appui (134) de la ou des béquilles (142) du pont thermique (102).

22. Combinaison selon la revendication 21, **caractérisée en ce que** le support (104) comprend au moins deux logements (130) pour les parties d'appui (134) d'au moins deux éléments d'appui (136) de la ou des béquilles (142).

23. Combinaison selon l'une quelconque des revendications 21 ou 22, **caractérisée en ce que** le support (104) comprend au moins deux logements (130) pour les parties d'appui (134) d'éléments d'appui (136) d'au moins deux différentes béquilles (142).
